(19) Europäisches Patentamt
European Patent Office
Office européen des brevets

(11) **EP 3 187 265 B1**

(12) **FASCICULE DE BREVET EUROPEEN**

(45) Date de publication et mention
de la délivrance du brevet:
**17.06.2020   Bulletin 2020/25**

(51) Int Cl.:
*B01J 33/00* (2006.01)      *B01J 20/32* (2006.01)
*B01J 2/00* (2006.01)       *B05D 5/00* (2006.01)
*B01J 37/02* (2006.01)      *C10G 45/08* (2006.01)
*B01J 23/70* (2006.01)      *B01J 23/85* (2006.01)

(21) Numéro de dépôt: **16207038.7**

(22) Date de dépôt: **28.12.2016**

(54) **PROCÉDÉ POUR ÉLIMINER LES ÉMISSIONS DE GAZ À PARTIR DE PARTICULES POREUSES**

VERFAHREN ZUR GASEMISSIONENVERHINDERUNG AUS PORÖSEN PARTIKELN

METHOD FOR SUPRESSING GAS EMISSIONS OUT OF POROUS PARTICLES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **28.12.2015   FR 1563367**

(43) Date de publication de la demande:
**05.07.2017   Bulletin 2017/27**

(73) Titulaire: **Eurecat S.A.
07800 La Voulte-sur-Rhône (FR)**

(72) Inventeurs:
• **DUFRESNE, Pierre
26400 AOUSTE SUR SYE (FR)**
• **GALLIOU, Pauline
07800 SAINT LAURENT DU PAPE (FR)**
• **BAFFERT, Mathieu
07500 GUILHERAND GRANGES (FR)**
• **LABOULFIE, Fabien
31130 BLAMA (FR)**

(74) Mandataire: **Casalonga
Casalonga & Partners
Bayerstraße 71/73
80335 München (DE)**

(56) Documents cités:
EP-A1- 0 897 748      EP-A1- 2 781 262
EP-A1- 2 962 757      WO-A1-2015/197712
CH-A- 404 380         FR-A1- 2 758 824
US-A- 4 476 804

**Description**

La présente invention a pour objet un procédé visant à limiter les émissions de gaz à partir de matériaux poreux sous forme de particules susceptibles de comprendre certains composés particuliers, notamment lors de leur stockage, leur manipulation et leur transport.

Plus précisément, le procédé selon l'invention permet de limiter les émissions de gaz indésirables, tels qu'en particulier les gaz ayant une odeur désagréable et/ou les gaz toxiques, susceptibles d'être émis par les matériaux poreux sous forme de particules qui contiennent un ou plusieurs composés choisi parmi les composés organiques, les composés halogénés, les composés borés et les composés phosphorés.

La présente invention a également pour objet le matériau à base de particules enrobées, obtenu au moyen du procédé décrit ci-avant.

Les matériaux poreux sous forme de particules concernés par la présente invention sont en particulier les catalyseurs et les agents adsorbants employés dans les procédés industriels.

Les catalyseurs concernés peuvent être en particulier, mais non limitativement, ceux employés dans des procédés de traitements d'hydrocarbures, par exemple dans les domaines du raffinage pétrolier et de la pétrochimie.

Les procédés de traitement des hydrocarbures effectués dans les raffineries et/ou les unités de pétrochimie incluent un certain nombre de traitements réalisés éventuellement en présence d'hydrogène, qui sont destinés à modifier la structure des molécules d'hydrocarbures et/ou à éliminer des coupes hydrocarbonées des composés indésirables tels que notamment les composés soufrés, azotés, aromatiques, métalliques. Peuvent être cités, à titre d'exemples non limitatifs, les procédés d'hydrocraquage ou d'hydroconversion, de réformage, d'isomérisation, d'alkylation, d'hydrogénation, de déshydrogénation et les procédés dits d'hydrotraitement tels que les procédés d'hydrodésulfuration, d'hydrodéazotation, d'hydrodéaromatisation, d'hydrodémétallation, d'hydrodéoxygénation.

La plupart de ces procédés de traitement d'hydrocarbures font appel à des catalyseurs solides qui se présentent sous forme de particules également dénommées « grains de catalyseurs » et qui comprennent en général un support poreux à base d'un ou plusieurs oxydes inorganiques réfractaires, sur lequel sont déposés un ou plusieurs métaux catalytiquement actifs. Ces métaux comprennent le plus souvent un ou plusieurs métaux du groupe VIII de la classification périodique des éléments, et/ou un ou plusieurs métaux du groupe VIB.

Ces catalyseurs contiennent de plus en plus souvent des composés additionnels ajoutés lors de leur fabrication et/ou destinés à en améliorer les propriétés, et notamment des composés organiques, halogénés, borés ou phosphorés. Ces composés peuvent être déposés à la surface des particules de catalyseur (en général, dans les pores du catalyseur), ou incorporés dans la structure même du support poreux.

Toutefois, la Demanderesse a constaté que la présence de ces composés particuliers est susceptible d'engendrer des dégagements gazeux indésirables, notamment lorsque ces composés sont volatiles, ou lorsqu'ils sont susceptibles de se décomposer en composés volatiles.

Ainsi, les catalyseurs contenant les composés précités sont susceptibles d'émettre des gaz par exemple lors de leur stockage, leur manipulation et/ou leur transport, ce qui présente divers inconvénients.

En effet, les dégagements gazeux peuvent présenter des odeurs particulièrement désagréables pour le personnel amené à manipuler ces particules.

En outre, les gaz émis par ces catalyseurs peuvent s'avérer nocifs, voire toxiques. Ainsi par exemple, les catalyseurs contenant des composés organiques oxygénés peuvent donner lieu à des dégagements de monoxyde de carbone liés à une décomposition partielle de ces composés organiques. Or, le monoxyde de carbone est de manière bien connue un gaz toxique, y compris en très faible concentration, ce qui rend particulièrement problématique la manipulation de ces catalyseurs.

Les catalyseurs qui ont été préparés ou traités en présence d'un solvant organique peuvent contenir des traces de solvant résiduel, et peuvent donner lieu à des émissions indésirables de solvants ou de produits de décomposition de ces derniers.

Les catalyseurs contenant des composés azotés, des composés organiques soufrés et/ou azotés, tels que ceux décrits par exemple dans la demande de brevet EP 2 174 711, peuvent donner lieu à des émissions de gaz soufrés ou azotés contenant de tels composés organiques, ou des produits de décomposition de ceux-ci. Les gaz émis peuvent avoir une odeur particulièrement forte, et désagréable.

D'autres exemples non limitatifs de catalyseurs susceptibles d'émettre des gaz indésirables sont les catalyseurs d'isomérisation contenant des composés halogénés, qui peuvent dans certaines conditions émettre du chlorure d'hydrogène.

Ces émissions de gaz posent plusieurs problèmes, non seulement d'odeurs indésirables mais également de toxicité, voire d'explosivité ou d'inflammabilité.

La même problématique se retrouve dans la mise en œuvre des agents adsorbants (également désignés par « adsorbants ») employés dans une large gamme d'applications industrielles, allant de la purification de flux gazeux ou liquides, à la séparation de mélanges gazeux ou liquides.

Ces agents adsorbants sont généralement constitués d'un ou plusieurs matériaux poreux choisis parmi les charbons actifs, les zéolithes, les alumines, les gels de silice, et les argiles activées, sous forme de particules. Ces agents adsorbants peuvent, de la même manière que les catalyseurs, donner lieu à des dégagements gazeux indésirables, voire nocifs pour l'homme et/ou l'environnement.

Ainsi, des précautions particulières doivent être prises lors du stockage, du transport et de la manipulation de ces matériaux en raison des émissions gazeuses, et ce d'autant plus lorsqu'il s'agit de gaz toxiques, pour lesquels le risque pour le personnel manipulant ces matériaux est particulièrement important.

EP 2 962 757 A1 décrit un procédé visant à limiter l'auto-échauffement de catalyseurs activés impliquant la formation d'une couche protectrice continue contenant un polymère filmogène à la surface des grains. Le procédé permet aussi de réduire efficacement les émissions de gaz toxiques.

WO 2015/197712 A1 décrit un procédé pour limiter l'émission de poussières à partir de grains de catalyseur impliquant la formation d'une couche protectrice à la surface des grains.

EP 0 897 748 A1 décrit un procédé de passivation de catalyseur impliquant la formation d'une couche protectrice continue à la surface des grains visant à limiter l'auto-échauffement de la phase active instable à l'air.

Il existe donc un besoin de trouver de nouvelles solutions, qui permettent de diminuer le plus possible les potentielles émissions de gaz à partir de ces matériaux poreux sous forme de particules contenant des composés organiques, des composés halogénés, des composés borés et/ou des composés phosphorés.

La présente invention vise à proposer une méthode qui permette de remédier de manière efficace et sûre aux problèmes précités.

La Demanderesse a découvert que cet objectif était atteint en recouvrant les particules d'une très fine couche protectrice d'un ou plusieurs polymère(s) filmogène(s), au moyen d'un procédé dans lequel les particules sont maintenues en mouvement au sein d'un flux de gaz chaud tandis qu'une composition liquide contenant le ou les polymère(s) filmogène(s) est pulvérisée sur lesdites particules dans les conditions définies dans la revendication 1.

Selon l'invention, la pulvérisation est effectuée à l'aide d'une buse d'atomisation bi-fluide, dans laquelle la composition liquide est mélangée avec un gaz sous pression, de préférence de l'air comprimé, permettant l'obtention de très fines gouttes. Pour obtenir une couche protectrice de bonne qualité, ayant notamment une bonne homogénéité, la pression relative d'atomisation est supérieure ou égale à $0,7.10^5$ Pa.

Le procédé selon l'invention a pour objectif de former une couche homogène d'un matériau protecteur à la surface externe des particules. La Demanderesse a en particulier découvert que, pour limiter de manière efficace les dégagements gazeux, il était nécessaire d'associer des matériaux protecteurs particuliers à base de polymères filmogènes avec un procédé d'enrobage effectué dans des conditions spécifiques.

La présente invention a ainsi pour objet un procédé pour limiter les émissions de gaz à partir d'un matériau poreux sous forme de particules comprenant un support inorganique poreux et au moins 0,1% en poids d'un ou plusieurs composés choisi parmi les composés organiques, les composés halogénés, les composés borés et les composés phosphorés. Selon l'invention, les particules sont placées en mouvement au sein d'un flux de gaz chaud les traversant, et une composition liquide contenant un ou plusieurs polymère(s) filmogène(s) est pulvérisée sur les particules en mouvement au moyen d'une buse d'atomisation bi-fluide, dans laquelle la composition liquide est mélangée avec un gaz sous pression, avec une pression relative d'atomisation, correspondant à la différence de pression du gaz à l'intérieur de la buse et la pression atmosphérique, supérieure ou égale à $0,7.10^5$ Pa, jusqu'à l'obtention sur la surface desdites particules d'une couche protectrice contenant le (les) polymère(s) filmogène(s) et présentant une épaisseur moyenne allant de 0,5 à 20 $\mu$m.

Le procédé selon la présente invention permet de limiter de manière très importante, voire d'éliminer complètement les dégagements gazeux à partir de particules formées de matériaux poreux comprenant un support inorganique poreux et au moins 0,1% en poids d'un ou plusieurs composés choisi parmi les composés organiques, les composés halogénés, les composés borés et les composés phosphorés.

Les particules, notamment de catalyseurs ou d'agents adsorbants, traitées au moyen du procédé de l'invention, peuvent ainsi être stockées ou transportées en grande quantité par exemple dans des sacs ou containers de volume important, et manipulées (par exemple, chargées dans des réacteurs industriels) sans précautions particulières.

En outre, la Demanderesse a constaté que le procédé selon l'invention permettait de préserver une excellente efficacité des unités industrielles auxquelles sont destinées les particules de catalyseur ou d'agent adsorbant, sans qu'il n'y ait de perte d'activité substantielle résultant du chargement des particules recouvertes de la couche protectrice particulière obtenue par ce procédé.

Enfin, la mise en œuvre d'une telle protection n'affecte pas substantiellement l'activité du catalyseur ou de l'agent adsorbant qui, une fois débarrassé de la couche protectrice selon l'invention, conserve une bonne activité.

Conformément à l'invention, les particules poreuses sont recouvertes d'une couche protectrice comprenant un ou plusieurs polymère(s) filmogène(s).

Par "polymère", on entend au sens de l'invention des composés comportant au moins deux motifs de répétition, de préférence au moins trois motifs de répétition et plus spécialement au moins dix motifs répétitifs.

Par "polymère filmogène", on désigne, de manière connue en soi, un polymère apte à former à lui seul ou en présence d'un agent auxiliaire de filmification, un film macroscopiquement continu sur un support, notamment sur les matériaux à base d'oxydes inorganiques tels que par exemple l'alumine.

La couche protectrice selon l'invention peut comprendre un ou plusieurs polymère(s) filmogène(s) en mélange avec un ou plusieurs autre(s) composé(s) lesquels peuvent être polymérique(s) ou non polymérique(s). Les autres composés, polymériques ou non, susceptibles d'être présents dans la couche protectrice selon l'invention, sont alors introduits en mélange avec le ou les polymère(s) filmogène(s), dans la composition liquide pulvérisée sur les particules en mouvement.

La couche protectrice peut également être entièrement constituée d'un ou plusieurs polymère(s) filmogène(s).

De préférence, la couche protectrice selon l'invention comprend de 50 à 100% en poids d'un ou plusieurs polymère(s) filmogène(s). De manière particulièrement préférée, la couche protectrice selon l'invention est entièrement constituée d'un ou plusieurs polymère(s) filmogène(s).

De préférence, le ou les polymère(s) filmogène(s) employés dans la présente invention sont choisis parmi :

- les homo et co-polymères d'alcool vinylique, tels que :

  - les alcools polyvinyliques ;
  - les copolymères formés de monomères alcool vinylique et oléfine(s), tels que les copolymères formés de monomères alcool vinylique et éthylène (copolymères EVOH); et
  - les co-polymères d'alcool vinylique partiellement hydrolysés, c'est-à-dire contenant encore des motifs acétate de vinyle non hydrolysés ;

- les polyéthylène glycols ;
- le collagène ;
- les polyéthylène téréphtalates (PET) ;
- les polyéthylènenaphtalates (PEN) ;
- les polyamides ;
- les polysaccharides, en particulier les polymères cellulosiques et leurs dérivés (parmi lesquels on préfère en parti-culier les $C_1$-$C_4$ alkyl-celluloses et plus particulièrement les méthyl-celluloses), et les amidons éventuellement modifiés ;
- les polychlorure de vinyles (PVC) ;
- les polychlorure de vinylidènes (PVDC) ;
- les polyacrylonitriles (PAN) ;
- les résines de polyacrylates, telles qu'en particulier les polyacrylates de méthyle ;
- les copolymères dont au moins un des monomères est de type acrylate ;
- et leurs mélanges.

Les alcools polyvinyliques et les copolymères formés de monomères alcool vinylique et oléfine(s) sont particulièrement préférés. Parmi ces derniers, on préfère tout particulièrement les copolymères formés de monomères alcool vinylique et éthylène ou copolymères EVOH.

L'épaisseur moyenne de la couche protectrice selon l'invention va de 0,5 à 20 µm.

Plus préférentiellement, l'épaisseur moyenne de la couche protectrice va de 0,5 à 10 µm, et mieux encore de 2 à 8 µm.

L'épaisseur moyenne de la couche recouvrant les particules peut être déterminée par microscopie électronique à balayage.

Selon la présente invention, la quantité de polymère filmogène employée doit être suffisante pour permettre de recouvrir les particules de manière la plus complète possible, tout en veillant à ce que la couche protectrice reste la plus fine possible.

A cet effet, la quantité totale de polymère filmogène employé va avantageusement de 0,1 à 4 % en poids, de préférence de 0,5 à 4 % en poids, et de manière encore plus préférée de 1 à 3 % en poids, par rapport au poids total des particules initiales.

Par poids total des particules initiales, on désigne ici le poids des particules non protégées, c'est-à-dire avant recouvrement de celles-ci par la couche protectrice selon l'invention.

Le ou les polymère(s) filmogène(s) ainsi que le ou les autres composés éventuellement présents dans la couche protectrice selon l'invention sont déposés sur les particules par pulvérisation d'une composition liquide les contenant.

Selon un premier mode de réalisation, la composition liquide pulvérisée sur les particules contient un solvant choisi parmi l'eau, un solvant organique ou un mélange d'eau et de solvant organique, ainsi que le ou les polymère(s) filmogène(s) sous forme dissoute ou sous forme dispersée dans ledit solvant. Elle peut également contenir le cas échéant un ou plusieurs agents stabilisants.

Dans le cas des catalyseurs ou agents adsorbants sensibles à l'eau, on utilise de préférence un ou plusieurs solvant(s) organique(s).

Dans ce cas, où la composition liquide est une solution ou une dispersion de polymère filmogène dans un solvant, ladite composition contient avantageusement de 0,1 à 50% en poids de polymère filmogène, de préférence de 0,5 à 25% en poids, et plus préférentiellement de 1 à 10% en poids de polymère filmogène, par rapport au poids total de la composition.

Dans le cas d'une dispersion du ou des polymère(s) filmogène(s) dans un solvant, la taille des particules de polymère dispersé est avantageusement inférieure ou égale à 500 nm et de préférence inférieure ou égale à 200 nm.

Selon un second mode de réalisation, la composition liquide pulvérisée sur les particules contient le ou les polymère(s) filmogène(s) à l'état fondu. En particulier, la composition liquide pulvérisée sur les particules peut être entièrement constituée du ou des polymère(s) filmogène(s) à l'état fondu.

Selon l'invention, les particules sont placées en mouvement au sein d'un flux de gaz chaud les traversant, c'est-à-dire au sein d'un flux de gaz passant au travers de la masse des particules en mouvement.

Tout dispositif permettant d'atteindre cet objectif peut être employé dans le cadre de la présente invention.

Selon une première variante, le procédé selon l'invention peut être mis en œuvre dans un tambour perforé dans lequel les particules sont mises en mouvement, et le tambour perforé est traversé en continu par un flux de gaz chaud.

Selon une seconde variante, le procédé selon l'invention peut être mis en œuvre en plaçant les particules en lit fluidisé au moyen du flux de gaz chaud.

Dans les deux variantes, le procédé selon l'invention peut être réalisé en batch ou en continu.

Le flux de gaz chaud traversant les particules en mouvement peut être constitué de tout gaz ou mélange gazeux tel que par exemple un gaz inerte tel que l'azote, l'air, ou un mélange de ces gaz. De préférence, il s'agit d'un flux d'air.

Toutefois, dans le cas d'un matériau poreux sensible à l'oxygène, on utilise un gaz inerte tel que l'azote.

Par flux de gaz « chaud », on entend un flux de gaz dont la température est supérieure à la température ambiante, c'est-à-dire supérieure à 25°C.

Avantageusement, le flux de gaz traversant les particules présente une température allant de 30 à 150°C, et de préférence de 50 à 100°C.

Le débit du flux de gaz est avantageusement de 5 à 100 m$^3$ par heure et par kilogramme de catalyseur.

La composition contenant le ou les polymère(s) filmogène(s) est pulvérisée sous forme de fines gouttelettes, de préférence de manière continue, sur les particules en mouvement.

Selon la présente invention, la pulvérisation se fait par atomisation, au moyen d'une buse d'atomisation bi-fluide, avec une pression relative d'atomisation supérieure ou égale à 0,7.10$^5$ Pa.

Les buses d'atomisation bi-fluides constituent des dispositifs connus en soi. Il s'agit de dispositifs de pulvérisation dans laquelle la composition liquide à pulvériser est mélangée avec un gaz sous pression, de manière à l'atomiser et la projeter sous forme de fines gouttelettes.

De préférence le gaz sous pression est de l'air comprimé.

Selon l'invention, la pression relative d'atomisation est supérieure ou égale à 0,7.10$^5$ Pa. La pression relative d'atomisation correspond à la différence de pression entre la pression du gaz à l'intérieur de la buse et la pression atmosphérique.

De préférence, la pression relative d'atomisation va de 0.7.10$^5$ à 4.10$^5$ Pa, plus préférentiellement de 1,2.10$^5$ à 3.10$^5$ Pa, encore plus préférentiellement de 1,5.10$^5$ à 2,5.10$^5$ Pa, et mieux encore de 1,7.10$^5$ à 2,3.10$^5$ Pa.

D'une manière générale, la composition liquide est avantageusement pulvérisée à une température allant de 25 à 250°C.

Dans le cas où la composition liquide contient le ou les polymère(s) filmogène(s) sous forme dissoute ou dispersée dans un solvant, ladite composition est de préférence pulvérisée à une température allant de 25 à 100°C.

Dans le cas où la composition liquide contient le ou les polymère(s) filmogène(s) à l'état fondu, ladite composition est de préférence pulvérisée à une température allant de 50 à 250°C.

Dans le cas où le procédé selon l'invention est réalisé dans un tambour perforé, la pulvérisation se fait de préférence sur la surface supérieure du lit de particules en mouvement.

Dans le cas où le procédé selon l'invention est réalisé en plaçant les particules en lit fluidisé, la pulvérisation peut se faire soit sur la surface supérieure du lit de particules, soit directement à l'intérieur du lit.

Le procédé selon l'invention peut être mis en œuvre en mode batch, ou en mode continu. Selon un mode de réalisation particulièrement préféré, il est mis en œuvre dans un tambour perforé fonctionnant en mode continu.

Les procédés décrits ci-avant permettent la formation d'une couche protectrice homogène à la surface externe des particules poreuses, ce qui garantit une efficacité maximale du procédé selon l'invention.

Après recouvrement des particules au moyen d'une couche protectrice selon l'invention, lesdites particules peuvent être séchées si nécessaire, par exemple à l'air libre ou en présence d'un flux gazeux d'air ou de tout autre gaz approprié.

Le procédé selon la présente invention peut s'appliquer en particulier à tout catalyseur solide se présentant sous forme de particules, tels que, mais non limitativement, ceux destinés au traitement des charges hydrocarbures notamment dans les domaines du raffinage pétrolier et de la pétrochimie.

Le procédé selon l'invention s'applique par exemple au traitement des catalyseurs d'hydroconversion d'hydrocarbures. Ces catalyseurs se présentent sous forme de particules qui comprennent un support d'oxyde réfractaire sur lequel est déposé au moins un oxyde de métal choisi parmi les métaux du groupe VIII et les métaux du groupe VIB de la Classification Périodique des Eléments.

Ainsi, selon un mode de réalisation, le matériau poreux sous forme de particules est choisi parmi les catalyseurs comprenant un support d'oxyde réfractaire sur lequel est déposé au moins un métal ou composé métallique.

De préférence le catalyseur comprend au moins un métal choisi parmi les métaux du groupe VIII de la Classification Périodique des Eléments, et/ou au moins un composé inorganique d'un tel métal. Les métaux correspondants peuvent être par exemple le cobalt, le nickel, le fer, le palladium, le platine.

Le catalyseur peut comprendre en outre au moins un métal choisi parmi les métaux du groupe VIB de la Classification Périodique des Eléments, et/ou au moins un composé inorganique d'un tel métal. Les métaux correspondants peuvent être par exemple le molybdène, le tungstène, le chrome.

La teneur en métal ou métaux du groupe VIII est généralement comprise entre 0,1 et 20% en poids par rapport au poids total du catalyseur non protégé, parfois jusqu'à 50%.

La teneur en métal ou métaux du groupe VIB est généralement comprise entre 3 et 30% en poids par rapport au poids total du catalyseur (sous forme non protégée).

De préférence, le support poreux des catalyseurs peut être notamment choisi parmi les alumines, les silices, les silice-alumines amorphes ou cristallisées (zéolithes). Plus préférentiellement, le support contient au moins 30% en poids, et mieux encore au moins 50% en poids, d'alumine.

Le procédé selon l'invention est particulièrement approprié pour traiter des catalyseurs contenant l'une des associations métalliques suivantes : CoMo, NiMo, NiW, NiCoMo, déposée sur un support à base d'alumine.

Les catalyseurs visés par l'invention se présentent sous la forme de particules de formes variables, préférentiellement sphérique, cylindrique, ou multilobes, et dont la dimension moyenne maximale en nombre ne dépasse généralement pas 5 mm.

Pour les particules de catalyseur de forme cylindrique ou multilobes, le diamètre moyen en nombre va généralement de 0,8 à 4 mm et la longueur moyenne en nombre va généralement de 2,5 à 5 mm. Dans certaines applications, des particules de forme sphériques sont utilisés, dont le diamètre moyen en nombre varie en général de 1,5 à 5mm.

Les dimensions moyennes en nombre des particules de catalyseur peuvent être déterminées, de manière connue en soi, par vidéogranulométrie ou à l'aide d'un pied à coulisse. On peut typiquement utiliser le vidéo-granulomètre CAMSIZER, développé par la société RETSCH.

Ces catalyseurs peuvent présenter une surface spécifique, mesurée par la méthode BET, généralement comprise entre 100 et 300 $m^2/g$, un volume poreux, déterminé par adsorption d'azote, allant de 0,20 à 1 ml/g, et un diamètre de pores moyen, déterminé par adsorption d'azote, allant de 7 à 20 nm.

Il convient de noter que, même si dans le présent exposé l'invention est décrite au regard des catalyseurs particuliers employés dans les procédés de traitements d'hydrocarbures, elle peut être mise en œuvre pour protéger tout catalyseur se présentant sous forme de particules solides, comprenant un support inorganique poreux.

Le procédé selon la présente invention peut également s'appliquer à tout agent adsorbant solide sous forme de particules poreuses, tels que par exemple ceux destinés à la séparation et/ou à la purification de charges liquides ou gazeuses.

Ces adsorbants comprennent un ou plusieurs matériaux poreux choisis généralement parmi les charbons actifs, les zéolithes (ou tamis moléculaires), les alumines, les gels de silice, et les argiles activées.

Certains adsorbants peuvent contenir en outre des métaux, tels que par exemple des métaux des groupes VIII, IB, IIB de la Classification Périodique des Eléments, ou des composés de tels métaux.

Ces agents adsorbants se présentent sous forme de particules qui peuvent présenter des formes diverses, telles que par exemple et de manière non limitative, des sphères, des cylindres, des grains multilobes, des pastilles, et dont la dimension moyenne maximale ne dépasse généralement pas 5 mm.

Ils présentent une surface spécifique, mesurée par la méthode BET, pouvant aller jusqu'à 1000 $m^2/g$, et un volume poreux, déterminé par adsorption d'azote pouvant aller jusqu'à des valeurs de l'ordre de 1,5 ml/g.

Comme exemples de tels agents adsorbants on peut citer par exemple les tamis moléculaires de type 3A, 4A, 5A, 13X employés entre autres pour sécher des flux de gaz ; les adsorbants à base d'alumine sodée employés notamment pour piéger les composés chlorés acides ; les charbons actifs employés dans de nombreuses applications, par exemple afin de piéger sélectivement des composés organiques dans divers fluides gazeux ou liquides ; les adsorbants contenant du nickel destinés à piéger les traces de composés sulfurés dans des fluides gazeux ; les adsorbants spécifiques à l'adsorption du mercure dans des fluides gazeux ou liquides comme par exemple des charbons actifs sulfurés ou non ou à base de métaux sulfurés tels que le cuivre.

Le procédé selon la présente invention s'applique tant à des catalyseurs et adsorbants neufs, c'est-à-dire des catalyseurs et adsorbants qui n'ont encore jamais été employés, qu'à des catalyseurs et adsorbants usés. Il s'applique aussi parfaitement à des catalyseurs et adsorbants régénérés, c'est-à-dire des catalyseurs et adsorbants usés qui ont été régénérés afin de les débarrasser de leurs contaminants et leur restituer un niveau d'activité permettant de les réutiliser.

Il s'applique tout particulièrement à des particules (notamment de catalyseur ou d'adsorbant) contenant un ou plusieurs composés choisis parmi les composés organiques, les composés halogénés, les composés borés et les composés phosphorés, en une teneur totale d'au moins 0,1% en poids, par rapport au poids total desdites particules. En effet, ces particules sont particulièrement susceptibles d'émettre des gaz indésirables, nocifs (éventuellement toxiques) et/ou odorants, et le procédé selon l'invention s'est avéré particulièrement efficace pour éviter ces phénomènes.

De préférence, les particules poreuses contiennent un ou plusieurs composés organiques.

Par composé organique, on désigne des composés contenant au moins un atome de carbone et au moins un atome d'hydrogène. Ces composés peuvent également contenir des hétéroatomes (par exemple S, N, O, halogénures, métaux,...).

Les composés organiques présents peuvent être des composés polymériques ou non polymériques. Ces composés peuvent contenir, outre des atomes de carbone et d'hydrogène, également un ou plusieurs hétéroatomes tels qu'en particulier des atomes d'oxygène, d'azote, de soufre.

Ces composés peuvent être présents dans la structure même des particules, ou simplement déposés à leur surface, par exemple dans les pores.

De préférence, le ou les composés organiques comprennent de 1 à 15 atomes de carbone, et plus préférentiellement de 2 à 10 atomes de carbone. De manière également préférée, ces composés contiennent en outre un ou plusieurs hétéroatomes choisis parmi l'oxygène, l'azote et le soufre.

De manière particulièrement préférée, de tels composés organiques ont été déposés à la surface du matériau (par exemple, à la fin de sa préparation ou de sa régénération). Les techniques permettant de déposer des composés organiques à la surface de particules poreuses sont bien connues de l'homme du métier. L'on peut procéder par exemple par imprégnation des particules à saturation du volume poreux, au moyen d'une solution contenant ces composés.

De préférence, les composés organiques, halogénés, borés et/ou phosphorés sont présents en une teneur totale allant de 0,1 à 20% en poids, de préférence de 0,5 à 15% en poids, plus préférentiellement de 1 à 10% en poids et mieux encore de 1,5 à 5% en poids, par rapport au poids totale desdites particules (c'est-à-dire, avant protection au moyen de la couche de polymère filmogène selon l'invention).

La déprotection des particules s'effectue de préférence une fois que celles-ci ont été chargées dans l'unité industrielle à laquelle elles sont destinées.

Elle est avantageusement effectuée en plaçant lesdites particules dans des conditions dans lesquelles la couche protectrice présente à la surface des particules s'élimine.

De manière particulièrement préférée, le ou les polymère(s) filmogène (s) employé(s) dans la présente invention sont choisis de telle sorte qu'il(s) s'élimine(nt) spontanément au contact de la charge ou par dégradation thermique lors du démarrage de l'unité dans laquelle les particules sont employées. Ce mode de réalisation permet d'enlever, de manière particulièrement simple et économique, la couche protectrice recouvrant les particules au moment du démarrage de l'unité.

Ainsi, le ou les polymère(s) filmogène(s) sont de préférence choisis parmi les polymères qui se décomposent ou qui sont lessivés par la charge aux températures comprises entre la température ambiante et la température de fonctionnement de l'unité, c'est-à-dire, typiquement, à une température allant de 25°C à 400°C, et à une pression allant de la pression atmosphérique à 20 MPa.

De manière plus préférée, le ou les polymère(s) filmogène(s) sont choisis parmi les composés qui se décomposent ou sont lessivés par la charge à une température allant de 50°C et 400°C, de préférence de 100 à 300°C et à une pression allant de 0,1 à 10 MPa.

Par charge on désigne, dans le cas des catalyseurs de traitement d'hydrocarbures, des coupes d'hydrocarbures ayant, typiquement, une gamme d'ébullition à pression atmosphérique comprise dans la plage allant de 75 à 650°C et pouvant être mises en contact avec le catalyseur à l'état liquide ou gazeux.

Dans le cas des adsorbants, les charges susceptibles d'être traitées incluent tous types de charges liquides ou gazeuses, organiques ou inorganiques.

Le procédé selon l'invention permet d'obtenir un matériau poreux sous forme de particules recouvertes d'une couche protectrice homogène.

Les particules, par exemple de catalyseur ou d'agent adsorbant, constituant ce matériau sont chacune recouvertes à leur surface par une couche protectrice comprenant un ou plusieurs polymère(s) filmogène(s). Cette couche est avantageusement homogène, et présente une épaisseur moyenne allant préférentiellement de 0,5 à 20 μm.

La qualité de la couche, et notamment sa bonne homogénéité, peut être évaluée en mesurant l'homogénéité de l'épaisseur de la couche, comme décrit dans les exemples ci-après.

De préférence, les particules de matériaux poreux obtenues par le procédé selon l'invention présentent une homogénéité d'épaisseur de couche supérieure ou égale à 65%, et plus préférentiellement supérieure ou égale à 70%.

Comme exposé ci-avant, la couche protectrice est de préférence constituée entièrement d'un ou plusieurs polymère(s) filmogène(s)).

Le ou les polymères filmogènes représentent de 0,1 à 4% en poids par rapport au poids total des particules et sont choisis parmi :

- les homo et co-polymères d'alcool vinylique, tels que :

  - les alcools polyvinyliques ;
  - les copolymères formés de monomères alcool vinylique et oléfine(s), tels que les copolymères formés de monomères alcool vinylique et éthylène (copolymères EVOH); et
  - les co-polymères d'alcool vinylique partiellement hydrolysés, c'est-à-dire contenant encore des motifs acétate de vinyle non hydrolysés ;

- les polyéthylène glycols ;
- le collagène ;
- les polyéthylène téréphtalates (PET) ;
- les polyéthylènenaphtalates (PEN) ;
- les polyamides ;
- les polysaccharides, en particulier les polymères cellulosiques et leurs dérivés (parmi lesquels on préfère en particulier les $C_1$-$C_4$ alkyl-celluloses et plus particulièrement les méthyl-celluloses), et les amidons éventuellement modifiés ;
- les polychlorure de vinyles (PVC) ;
- les polychlorure de vinylidènes (PVDC) ;
- les polyacrylonitriles (PAN) ;
- les résines de polyacrylates, telles qu'en particulier les polyacrylates de méthyle ;
- les copolymères dont au moins un des monomères est de type acrylate ;
- et leurs mélanges.

Les alcools polyvinyliques et les copolymères formés de monomères alcool vinylique et oléfine(s) sont particulièrement préférés. Parmi ces derniers, on préfère tout particulièrement les copolymères formés de monomères alcool vinylique et éthylène ou copolymères EVOH.

Comme exposé ci-avant, l'épaisseur moyenne de la couche protectrice selon l'invention va de préférence de 0,5 à 10 $\mu$m, et mieux encore de 2 à 8 $\mu$m.

De même, la quantité totale de polymère filmogène représente de 0,1 à 4 % en poids, de préférence de 0,5 à 4 % en poids, et de manière encore plus préférée de 1 à 3 % en poids, par rapport au poids total des particules initiales.

Les particules sont formées d'un matériau poreux comprenant un support inorganique poreux et au moins 0,1% en poids d'un ou plusieurs composés choisi parmi les composés organiques, les composés halogénés, les composés borés et les composés phosphorés.

Tout ce qui a été décrit ci-avant concernant le procédé de protection s'applique bien entendu au matériau protégé selon la présente invention.

Les exemples qui suivent sont donnés à titre purement illustratif de la présente invention.

EXEMPLES

Préparation du matériau adsorbant A :

Les exemples 1 à 5 ci-après ont été réalisés à partir d'un matériau adsorbant de type alumine gamma commerciale, ayant une surface spécifique de 200m$^2$/g, et qui se présente sous forme d'extrudés de forme trilobe ayant un diamètre moyen en nombre de 1,2 mm et de longueur moyenne en nombre de 3,8 mm. Afin de simuler l'état final de cet adsorbant après une utilisation dans un procédé d'hydrotraitement, 2kg d'adsorbant a été imprégné lentement avec 160g de gazole brut puis traité à 70°C sous un flux d'azote de 10 m3/h pendant 1h, cette deuxième étape étant utilisée pour mimer une étape de stripping in-situ. On obtient ainsi l'adsorbant A.

L'analyse de l'adsorbant A montre qu'il contient 6,9% poids de carbone. L'analyse des COV (méthode de mesure décrite ci-après) montre une émission de 215 ppm d'hydrocarbures dans l'air.

Exemple 1 : (conforme à l'invention)

2 kg de l'adsorbant A ont été placés dans un tambour entièrement perforé en inox ayant un volume de 18 litres (volume utile 5L), à une vitesse de rotation de 22 tours / minute, traversé entièrement par un flux d'air chaud de 150m$^3$/h à 90°C. Une solution de polymère filmogène est pulvérisée sur les particules à l'aide d'une buse bi-fluide d'atomisation, de la manière décrite ci-après. Le flux d'air chaud se fait parallèlement au jet de pulvérisation, et dans le même sens (flux descendant).

Une solution de 250 g de copolymère polyéthylène-alcool polyvinylique (commercialisé sous la dénomination EXCEVAL par la société Kuraray) à 8% en poids dans l'eau a été injectée sur les particules d'adsorbant au moyen d'une buse bi-fluide d'atomisation (modèle 970/0 S75 de la marque Schlick, avec insert liquide de 1mm de diamètre interne), avec un débit de solution de 10 g / min et une pression relative d'air comprimé (pression relative d'atomisation) de 1,2.10$^5$ Pa.

L'eau est évaporée en continu, ce qui conduit à la formation d'une couche de polymère à la surface des particules d'adsorbant.

Après injection complète du liquide, l'adsorbant est encore agité pendant 5 minutes, puis refroidi à température ambiante.

On a ainsi obtenu l'adsorbant B selon l'invention, dont les particules sont recouvertes d'une couche de copolymère polyéthylène - alcool polyvinylique.

L'analyse de l'adsorbant B montre qu'il contient 7,4% en poids de carbone. L'observation en haute définition en zoom X200 de 10 grains effectuée par microscopie électronique à balayage a permis de mesurer une homogénéité d'épaisseur de couche de 68% (méthode de mesure décrite ci-après) ainsi qu'une épaisseur moyenne de la couche de 2,5 μm. L'analyse des COV (méthode de mesure décrite ci-après) montre une émission de 16 ppm d'hydrocarbures dans l'air.

Exemple 2 : (conforme à l'invention)

2 kg de l'adsorbant A ont été placés dans un tambour entièrement perforé en inox ayant un volume de 18 litres (volume utile 5L), à une vitesse de rotation de 22 tours / minute, traversé entièrement par un flux d'air chaud de 150m$^3$/h à 90°C. Une solution de polymère filmogène est pulvérisée sur les particules à l'aide d'une buse bi-fluide d'atomisation, de la manière décrite ci-après. Le flux d'air chaud se fait parallèlement au jet de pulvérisation, et dans le même sens (flux descendant).

Une solution de 250 g de copolymère polyéthylène-alcool polyvinylique (commercialisé sous la dénomination EXCEVAL par la société Kuraray) à 8% en poids dans l'eau a été injectée sur les particules d'adsorbant au moyen d'une buse bi-fluide d'atomisation (modèle 970/0 S75 de la marque Schlick, avec insert liquide de 1mm de diamètre interne), avec un débit de solution de 10 g / min et une pression relative d'air comprimé (pression relative d'atomisation) de 1,6.10$^5$ Pa.

L'eau est évaporée en continu, ce qui conduit à la formation d'une couche de polymère à la surface des particules d'adsorbant.

Après injection complète du liquide, l'adsorbant est encore agité pendant 5 minutes, puis refroidi à température ambiante.

On a ainsi obtenu l'adsorbant C selon l'invention, dont les particules sont recouvertes d'une couche de copolymère polyéthylène - alcool polyvinylique.

L'analyse de l'adsorbant C montre qu'il contient 7,3% en poids de carbone. L'observation en haute définition en zoom X200 de 10 grains effectuée par microscopie électronique à balayage a permis de mesurer une homogénéité d'épaisseur de couche de 73% (méthode de mesure décrite ci-après) ainsi qu'une épaisseur moyenne de la couche de 2,5 μm. L'analyse des COV (méthode de mesure décrite ci-après) montre une émission de 10 ppm d'hydrocarbures dans l'air.

Exemple 3 : (comparatif)

2 kg de l'adsorbant A ont été placés dans un tambour non perforé en inox ayant un volume de 18 litres (volume utile 5L), à une vitesse de rotation de 22 tours / minute, et un flux d'air chaud de 150m$^3$/h à 90°C est dirigé sur la surface du lit d'adsorbant. L'air chaud rentre par une arrivée située au sein du tambour, et ressort par l'ouverture située à l'avant du tambour, sans traverser le lit d'adsorbant (lit léché).

Une solution de 250 g de copolymère polyéthylène-alcool polyvinylique (commercialisé sous la dénomination EXCEVAL par la société Kuraray) à 8% en poids dans l'eau a été injectée sur les particules d'adsorbant au moyen d'une buse bi-fluide d'atomisation (modèle 970/0 S75 de la marque Schlick, avec insert liquide de 1mm de diamètre interne), avec un débit de solution de 10 g / min et une pression relative d'air comprimé (pression relative d'atomisation) de

1,2.10$^5$ Pa.

L'eau est évaporée en continu, ce qui conduit à la formation d'une couche de polymère à la surface des particules d'adsorbant.

Après injection complète du liquide, l'adsorbant est encore agité pendant 5 minutes, puis refroidi à température ambiante.

On a ainsi obtenu l'adsorbant D non-conforme à l'invention, dont les particules sont recouvertes d'une couche de copolymère polyéthylène-alcool polyvinylique.

L'analyse de l'adsorbant D montre qu'il contient 7.5% en poids de carbone. L'observation en haute définition en zoom X200 de 10 grains effectuée par microscopie électronique à balayage a permis de mesurer une homogénéité d'épaisseur de couche de 51% (méthode de mesure décrite ci-après) ainsi qu'une épaisseur moyenne de la couche de 2,8 μm. L'analyse des COV (méthode de mesure décrite ci-après) montre une émission de 42 ppm d'hydrocarbures dans l'air.

Exemple 4 :(comparatif)

2 kg de l'adsorbant A ont été placés dans un tambour entièrement perforé en inox ayant un volume de 18 litres (volume utile 5L), à une vitesse de rotation de 22 tours / minute, traversé entièrement par un flux d'air chaud de 150m$^3$/h à 90°C. Une solution de polymère filmogène est pulvérisée sur les particules à l'aide d'une buse bi-fluide d'atomisation, de la manière décrite ci-après. Le flux d'air chaud se fait parallèlement au jet de pulvérisation, et dans le même sens (flux descendant).

Une solution de 250 g de copolymère polyéthylène-alcool polyvinylique (commercialisé sous la dénomination EXCEVAL par la société Kuraray) à 8% en poids dans l'eau a été injectée sur les particules d'adsorbant au moyen d'une buse bi-fluide d'atomisation (modèle 970/0 S75 de la marque Schlick, avec insert liquide de 1mm de diamètre interne), avec un débit de solution de 10 g / min et une pression relative d'air comprimé (pression relative d'atomisation) de 0,6.10$^5$ Pa.

L'eau est évaporée en continu, ce qui conduit à la formation d'une couche de polymère à la surface des particules d'adsorbant.

Après injection complète du liquide, l'adsorbant est encore agité pendant 5 minutes, puis refroidi à température ambiante.

On a ainsi obtenu l'adsorbant E non-conforme à l'invention, dont les particules sont recouvertes d'une couche de copolymère polyéthylène-alcool polyvinylique.

L'analyse de l'adsorbant E montre qu'il contient 7,4% en poids de carbone. L'observation en haute définition en zoom X200 de 10 grains effectuée par microscopie électronique à balayage a permis de mesurer une homogénéité d'épaisseur de couche de 60% (méthode de mesure décrite ci-après) ainsi qu'une épaisseur moyenne de couche de 2,6 μm. L'analyse des COV (méthode de mesure décrite ci-après) montre une émission de 28 ppm d'hydrocarbures dans l'air.

Exemple 5 :(comparatif)

2 kg de l'adsorbant A ont été placés dans un tambour entièrement perforé en inox ayant un volume de 18 litres (volume utile 5L), à une vitesse de rotation de 22 tours / minute, traversé entièrement par un flux d'air chaud de 150m$^3$/h à 90°C. A titre de comparaison, de l'eau ne contenant pas de polymère est pulvérisée sur les particules à l'aide d'une buse bi-fluide d'atomisation, de la manière décrite ci-après. Le flux d'air chaud se fait parallèlement au jet de pulvérisation, et dans le même sens (flux descendant).

250 g d'eau a été injectée sur les particules d'adsorbant au moyen d'une buse bi-fluide d'atomisation (modèle 970/0 S75 de la marque Schlick, avec insert liquide de 1mm de diamètre interne), avec un débit de 10 g / min et une pression relative d'air comprimé (pression relative d'atomisation) de 1,2.10$^5$ Pa.

Après injection complète du liquide, l'adsorbant est encore agité pendant 5 minutes, puis refroidi à température ambiante.

On a ainsi obtenu l'adsorbant F non-conforme à l'invention.

L'analyse de l'adsorbant F montre qu'il contient 6,7% en poids de carbone. L'analyse des COV (méthode de mesure décrite ci-après) montre une émission de 110 ppm d'hydrocarbures dans l'air.

Les exemples 6 à 10 ci-après ont été réalisés à partir d'un catalyseur commercial d'hydrotraitement régénéré, qui contient 20% en poids de $MoO_3$, et 5% en poids de CoO sur support d'alumine, et qui se présente sous forme d'extrudés de forme cylindrique ayant un diamètre moyen en nombre de 1,3 mm et de longueur moyenne en nombre de 3,2 mm.

Préparation du catalyseur G :

2kg de catalyseur régénéré est placé dans une turbine de mélange puis imprégné à saturation du volume poreux par une solution constituée de 200g de polyéthylène glycol 200 (PEG-200) et de 660g d'eau déminéralisée.

Après imprégnation, le catalyseur a été soumis à une étape de maturation pendant 17 heures à une température de 70°C, puis séché sous azote dans un four chauffé à 200°C, pour obtenir le catalyseur G.

L'analyse de CO (méthode de mesure décrite ci-après) montre une émission de 144 ppm de CO dans l'air.

Exemple 6 (conforme à l'invention) :

2 kg du catalyseur G ont été placés dans un tambour entièrement perforé en inox ayant un volume de 18 litres (volume utile 5L), à une vitesse de rotation de 22 tours / minute, traversé entièrement par un flux d'air chaud de 160m$^3$/h à 90°C. Une solution de polymère filmogène est pulvérisée sur les particules à l'aide d'une buse bi-fluide d'atomisation, de la manière décrite ci-après. Le flux d'air chaud se fait parallèlement au jet de pulvérisation, et dans le même sens (flux descendant).

Une solution de 800 g de copolymère polyéthylène-alcool polyvinylique (commercialisé sous la dénomination EXCEVAL par la société Kuraray) à 5% en poids dans l'eau a été injectée sur les particules de catalyseur au moyen d'une buse bi-fluide d'atomisation (modèle 970/0 S75 de la marque Schlick, avec insert liquide de 1mm de diamètre interne), avec un débit de solution de 7 g / min et une pression relative d'air comprimé (pression relative d'atomisation) de 1,2.10$^5$ Pa.

L'eau est évaporée en continu, ce qui conduit à la formation d'une couche de polymère à la surface des particules de catalyseur.

Après injection complète du liquide, le catalyseur est encore agité pendant 5 minutes, puis refroidi à température ambiante.

On a ainsi obtenu le catalyseur H selon l'invention, dont les particules sont recouvertes d'une couche de copolymère polyéthylène - alcool polyvinylique.

L'observation en haute définition en zoom X200 de 10 grains effectuée par microscopie électronique à balayage a permis de mesurer une homogénéité d'épaisseur de couche de 76% (méthode de mesure décrite ci-après) ainsi qu'une épaisseur moyenne de la couche de 5,8 $\mu$m. L'analyse de CO (méthode de mesure décrite ci-après) montre une émission de 6 ppm de CO dans l'air.

Exemple 7 (comparatif) :

2 kg du catalyseur G ont été placés dans un tambour non perforé en inox ayant un volume de 18 litres (volume utile 5L), à une vitesse de rotation de 22 tours / minute, et un flux d'air chaud de 160m$^3$/h à 90°C est dirigé sur la surface du lit d'adsorbant. L'air chaud rentre par une arrivée située au sein du tambour, et ressort par l'ouverture située à l'avant du tambour, sans traverser le lit d'adsorbant (lit léché).

Une solution de 800 g de copolymère polyéthylène-alcool polyvinylique (commercialisé sous la dénomination EXCEVAL par la société Kuraray) à 5% en poids dans l'eau a été injectée sur les particules de catalyseur au moyen d'une buse bi-fluide d'atomisation (modèle 970/0 S75 de la marque Schlick, avec insert liquide de 1mm de diamètre interne), avec un débit de solution de 7 g / min et une pression relative d'air comprimé (pression relative d'atomisation) de 1,2.10$^5$ Pa.

L'eau est évaporée en continu, ce qui conduit à la formation d'une couche de polymère à la surface des particules de catalyseur.

Après injection complète du liquide, le catalyseur est encore agité pendant 5 minutes, puis refroidi à température ambiante.

On a ainsi obtenu le catalyseur I non-conforme à l'invention, dont les particules sont recouvertes d'une couche de copolymère polyéthylène -alcool polyvinylique.

L'observation en haute définition en zoom X200 de 10 grains effectuée par microscopie électronique à balayage a permis de mesurer une homogénéité d'épaisseur de couche de 53% (méthode de mesure décrite ci-après) ainsi qu'une épaisseur moyenne de couche de 6,1 $\mu$m. L'analyse de CO (méthode de mesure décrite ci-après) montre une émission de 26 ppm de CO dans l'air.

Exemple 8 (comparatif) :

2 kg du catalyseur G ont été placés dans un tambour entièrement perforé en inox ayant un volume de 18 litres (volume utile 5L), à une vitesse de rotation de 22 tours / minute, traversé entièrement par un flux d'air chaud de 160m$^3$/h à 90°C. Une solution de polymère filmogène est pulvérisée sur les particules à l'aide d'une buse bi-fluide d'atomisation, de la manière décrite ci-après. Le flux d'air chaud se fait parallèlement au jet de pulvérisation, et dans le même sens (flux descendant).

Une solution de 800 g de copolymère polyéthylène-alcool polyvinylique (commercialisé sous la dénomination EXCEVAL par la société Kuraray) à 5% en poids dans l'eau a été injectée sur les particules de catalyseur au moyen d'une buse bi-fluide d'atomisation (modèle 970/0 S75 de la marque Schlick, avec insert liquide de 1mm de diamètre interne), avec un débit de solution de 7 g / min et une pression relative d'air comprimé (pression relative d'atomisation) de $0,6.10^5$ Pa.

L'eau est évaporée en continu, ce qui conduit à la formation d'une couche de polymère à la surface des particules de catalyseur.

Après injection complète du liquide, le catalyseur est encore agité pendant 5 minutes, puis refroidi à température ambiante.

On a ainsi obtenu le catalyseur J non-conforme à l'invention, dont les particules sont recouvertes d'une couche de copolymère polyéthylène -alcool polyvinylique.

L'observation en haute définition en zoom X200 de 10 grains effectuée par microscopie électronique à balayage a permis de mesurer une homogénéité d'épaisseur de couche de 61% (méthode de mesure décrite ci-après) ainsi qu'une épaisseur moyenne de couche de 6,0 $\mu$m. L'analyse de CO (méthode de mesure décrite ci-après) montre une émission de 18 ppm de CO dans l'air.

Exemple 9 (comparatif) :

2 kg du catalyseur G ont été placés dans un tambour entièrement perforé en inox ayant un volume de 18 litres (volume utile 5L), à une vitesse de rotation de 22 tours / minute, traversé entièrement par un flux d'air chaud de 160m$^3$/h à 90°C. A titre de comparaison, de l'eau ne contenant pas de polymère est pulvérisée sur les particules à l'aide d'une buse bi-fluide d'atomisation, de la manière décrite ci-après. Le flux d'air chaud se fait parallèlement au jet de pulvérisation, et dans le même sens (flux descendant).

800 g d'eau a été injectée sur les particules de catalyseur au moyen d'une buse bi-fluide d'atomisation (modèle 970/0 S75 de la marque Schlick, avec insert liquide de 1mm de diamètre interne), avec un débit de 10 g / min et une pression relative d'air comprimé (pression relative d'atomisation) de $1,2.10^5$ Pa.

Après injection complète du liquide, le catalyseur est encore agité pendant 5 minutes, puis refroidi à température ambiante.

On a ainsi obtenu le catalyseur K non conforme à l'invention.

L'analyse de CO (méthode de mesure décrite ci-après) montre une émission de 128 ppm de CO dans l'air.

Les propriétés des adsorbants et catalyseurs A à K décrits dans les exemples ci-avant ont été évaluées, en déterminant l'homogénéité de l'épaisseur de couche. Pour les seuls adsorbants A à F, la mesure de COV a été faite en complément. De même, l'analyse de CO a été effectuée pour les seuls catalyseurs G à K. Les méthodes de mesure sont décrites ci-après :

- L'homogénéité de l'épaisseur de la couche d'enrobage et l'épaisseur moyenne de la couche.

Ce paramètre caractérise l'homogénéité, et donc la qualité, de la couche de polymère déposée en surface du grain d'adsorbant.

Afin d'obtenir un échantillon représentatif, le produit à analyser est divisé plusieurs fois successives de manière aléatoire en utilisant par exemple un diviseur à rifles jusqu'à obtenir une vingtaine de grains à analyser. La première préparation consiste en une découpe ou fracture nette de chaque grain, qui permettra une observation du grain en coupe par microscopie. Pour les grains de type extrudé, un refroidissement à l'azote liquide suivi d'une fracture manuelle du grain est généralement suffisant pour obtenir une découpe nette. Pour des grains de formes différentes, on peut par exemple utiliser des outils de découpe habituels en microscopie, telle qu'un microtome. Parmi les grains fracturés, 10 sont choisis aléatoirement, en prenant soin d'écarter les grains qui ne se seraient pas coupés/fracturés de manière très nette. Il est aussi important de noter que, dans le cas où certains grains seraient agglomérés entre eux, ceux-ci ne sont pas retenus pour la mesure.

Ces 10 grains sont introduits pour observation dans un microscope électronique à balayage, de sorte à pouvoir observer le plan de coupe. Pour chaque grain, on sélectionne de manière aléatoire une portion du périmètre extérieur du plan de coupe/fracture du grain, d'une longueur totale d'au minimum 900$\mu$m. Le grossissement et la définition de l'image doivent être suffisantes, pour pouvoir mesurer l'épaisseur de la couche de polymère, avec une marge d'erreur inférieure à 5%. Le premier point de mesure est choisi à une extrémité de la zone d'observation. En ce point, on mesure précisément l'épaisseur EI de l'enrobage. Puis, on mesure une longueur de 60$\mu$m le long du périmètre du grain, et on fait une nouvelle mesure d'épaisseur E2 à cet endroit. Cette étape est répétée jusqu'à avoir effectué entre 15 et 20 mesures d'épaisseurs pour ce même grain. A partir de cette liste de mesure d'épaisseurs, l'homogénéité de l'épaisseur de la couche d'enrobage du grain est calculée de la manière suivante :

-Homogénéité normalisée sur le grain j (en %) :

$$H_j = \left(1 - \frac{\frac{1}{n}\sum_1^n|Ei - \overline{E_j}|}{\overline{E_j}}\right) \times 100$$

où $\overline{E_j}$ est l'épaisseur moyenne de la couche sur le grain j et n le nombre de mesures effectué.

L'homogénéité de l'épaisseur de couche $H_E$ de l'échantillon est définie comme étant la moyenne des homogénéités Hj mesurées sur chacun des dix grains.

L'épaisseur moyenne de la couche sur l'échantillon est définie comme étant la moyenne des épaisseurs Ej mesurées sur chacun des dix grains.

- L'émission de COV (Composés Organiques Volatiles) à basse température :

Un échantillon de 25g de catalyseur ou adsorbant est pesé puis placé dans un récipient étanche de IL équipé d'un septum. Le récipient est ensuite placé dans une étuve thermostatée à 120°C pendant 24h. Au bout de 24h, le récipient est sorti et laissé à refroidir à la température ambiante. On effectue alors une analyse des composés organiques volatils (ou « COV ») sur le gaz contenu dans le récipient, par prélèvement à travers le septum. L'analyse du gaz peut être par exemple effectuée avec un analyseur utilisant une détection à photoionisation (PID), tel que le MiniRAE Lite commercialisé par la société RAE systems, qui donne directement le résultat en ppm de COV total.

- Les émissions de CO (monoxyde de carbone) à basse température:

Un échantillon de 90g de catalyseur est pesé puis placé dans un récipient de 200mL sous air qui est ensuite étanché à l'aide d'un bouchon équipé d'un septum. Le récipient est ensuite placé dans une étuve thermostatée à 45°C pendant 2 jours (48h). Au bout de 48h, on effectue alors une analyse de monoxyde de carbone (CO) sur le gaz contenu dans le récipient, par prélèvement à travers le septum. La mesure du taux de monoxyde de carbone est typiquement effectuée par un analyseur de gaz avec capteur sélectif CO, tel que par exemple le modèle 317-3 de la marque Testo qui donne directement le résultat en ppm de CO.

Pour chaque adsorbant A à F, on a déterminé l'homogénéité de l'épaisseur de la couche d'enrobage et les émissions de COV immédiatement après leur préparation.

Pour chaque catalyseur G à K, on a déterminé l'homogénéité de l'épaisseur de la couche d'enrobage et les émissions de CO immédiatement après leur préparation.

Les résultats obtenus sont rassemblés dans les tableaux 1 et 2 ci-dessous :

Tableau 1

| | Equipement | Pression relative d'atomisation ($10^5$ Pa) | Emission de COV (ppm) | Homogénéité épaisseur de couche (%) |
|---|---|---|---|---|
| Adsorbant A non traité | | | 215 | / |
| Adsorbant B (invention) | Tambour perforé | 1,2 | 16 | 68 |
| Adsorbant C (invention) | Tambour perforé | 1,6 | 10 | 73 |
| Adsorbant D (comparatif) | Tambour plein | 1,2 | 42 | 51 |
| Adsorbant E (comparatif) | Tambour perforé | 0,6 | 28 | 60 |
| Adsorbant F (comparatif) | Tambour perforé | 1,2 | 110 | / |

**EP 3 187 265 B1**

Tableau 2

| | Equipement | Pression relative d'atomisation ($10^5$ Pa) | Emission de CO (ppm) | Homogénéité épaisseur de couche (%) |
|---|---|---|---|---|
| Catalyseur G non traité | | | 144 | / |
| Catalyseur H (invention) | Tambour perforé | 1,2 | 6 | 76 |
| Catalyseur I (comparatif) | Tambour plein | 1,2 | 26 | 53 |
| Catalyseur J (comparatif) | Tambour perforé | 0,6 | 18 | 61 |
| Catalyseur K (comparatif) | Tambour perforé | 1,2 | 128 | / |

Les résultats ci-dessus démontrent que le procédé selon l'invention alliant l'utilisation d'une technologie dans laquelle les particules sont traversées par un flux de gaz et la pulvérisation de polymère filmogène et réalisée avec une pression d'atomisation telle que revendiquée, permet d'obtenir de meilleurs résultats en terme de limitation d'émissions de gaz indésirables.

De plus, ce procédé permet l'obtention d'une fine couche d'enrobage en surface des particules, qui est plus homogène.

**Revendications**

1. Procédé pour éliminer les émissions de gaz engendrées par un ou plusieurs composés choisi parmi les composés organiques, les composés halogénés, les composés borés et les composés phosphorés présents dans un matériau poreux sous forme de particules comprenant un support inorganique poreux et au moins 0,1% en poids d'un ou plusieurs desdits composés **caractérisé en ce que** les particules sont placées en mouvement au sein d'un flux de gaz chaud les traversant, et une composition liquide contenant un ou plusieurs polymère(s) filmogène(s) est pulvérisée sur les particules en mouvement au moyen d'une buse d'atomisation bi-fluide dans laquelle la composition liquide est mélangée avec un gaz sous pression, avec une pression relative d'atomisation, correspondant à la différence de pression du gaz à l'intérieur de la buse et la pression atmosphérique, supérieure ou égale à $0,7.10^5$ Pa, jusqu'à l'obtention sur la surface desdites particules d'une couche protectrice contenant le (les) polymère(s) filmogène(s) et présentant une épaisseur moyenne allant de 0,5 à 20 $\mu$m.

2. Procédé selon la revendication précédente, **caractérisé en ce que** la pression relative d'atomisation va de $0.7.10^5$ à $4.10^5$ Pa, plus préférentiellement de $1,2.10^5$ à $3.10^5$ Pa, encore plus préférentiellement de $1,5.10^5$ à $2,5.10^5$ Pa, et mieux encore de $1,7.10^5$ à $2,3.10^5$ Pa.

3. Procédé selon l'une des revendications précédentes, **caractérisé en ce que** la composition liquide est une solution ou une dispersion du (des) polymère(s) filmogène(s) dans un solvant, et contient de préférence de 0,1 à 50% en poids de polymère filmogène, plus préférentiellement de 0,5 à 25% en poids, et encore plus préférentiellement de 1 à 10% en poids de polymère filmogène, par rapport au poids total de la composition.

4. Procédé selon l'une des revendications précédentes, **caractérisé en ce qu'**il est mis en œuvre dans un tambour perforé dans lequel les particules sont mises en mouvement, ledit tambour perforé étant traversé en continu par un flux de gaz chaud.

5. Procédé selon la revendication précédente, **caractérisé en ce qu'**il est mis en œuvre dans un tambour perforé fonctionnant en mode continu.

6. Procédé selon l'une des revendications 1 à 3, **caractérisé en ce qu'**il est mis en œuvre en plaçant les particules en lit fluidisé au moyen du flux de gaz chaud.

**14**

7. Procédé selon l'une quelconque des revendications précédentes, **caractérisé en ce que** le flux de gaz traversant les particules présente une température allant de 30 à 150°C, et de préférence de 50 à 100°C.

8. Procédé selon l'une quelconque des revendications précédentes, **caractérisé en ce que** le débit du flux de gaz est de 5 à 100 m$^3$ par heure et par kilogramme de catalyseur.

9. Procédé selon l'une quelconque des revendications précédentes, **caractérisé en ce que** la couche protectrice comprend de 50 à 100% en poids d'un ou plusieurs polymère(s) filmogène(s), et de préférence la couche protectrice est entièrement constituée d'un ou plusieurs polymère(s) filmogène(s).

10. Procédé selon l'une quelconque des revendications précédentes, **caractérisé en ce que** le ou les polymère(s) filmogène(s) sont choisis parmi :

 - les homo et co-polymères d'alcool vinylique, tels que

  - les alcools polyvinyliques ;
  - les copolymères formés de monomères alcool vinylique et oléfine(s), tels que les copolymères formés de monomères alcool vinylique et éthylène (copolymères EVOH); et
  - les co-polymères d'alcool vinylique partiellement hydrolysés, c'est-à-dire contenant encore des motifs acétate de vinyle non hydrolysés ;

 - les polyéthylène glycols ;
 - le collagène ;
 - les polyéthylène téréphtalates (PET) ;
 - les polyéthylènenaphtalates (PEN) ;
 - les polyamides ;
 - les polysaccharides, en particulier les polymères cellulosiques et leurs dérivés (parmi lesquels en particulier les $C_1$-$C_4$ alkyl-celluloses et plus particulièrement les méthyl-celluloses), et les amidons éventuellement modifiés ;
 - les polychlorure de vinyles (PVC) ;
 - les polychlorure de vinylidènes (PVDC) ;
 - les polyacrylonitriles (PAN) ;
 - les résines de polyacrylates, telles qu'en particulier les polyacrylates de méthyle ;
 - les copolymères dont au moins un des monomères est de type acrylate ;
 - et leurs mélanges,
 et de préférence le polymère filmogène est choisi parmi les alcools polyvinyliques et les copolymères formés de monomères alcool vinylique et oléfine(s), et plus préférentiellement parmi les copolymères formés de monomères alcool vinylique et éthylène (copolymères EVOH).

11. Procédé selon l'une quelconque des revendications précédentes, **caractérisé en ce que** l'épaisseur moyenne de la couche protectrice va de 0,5 à 10 $\mu$m, et mieux encore va de 2 à 8 $\mu$m.

12. Procédé selon l'une quelconque des revendications précédentes, **caractérisé en ce que** la quantité totale de polymère filmogène employé va de 0,1 à 4 % en poids, de préférence de 0,5 à 4 % en poids, et de manière encore plus préférée de 1 à 3 % en poids, par rapport au poids total des particules initiales.

13. Procédé selon l'une quelconque des revendications précédentes, **caractérisé en ce que** le matériau poreux sous forme de particules comprend un support d'oxyde réfractaire sur lequel est déposé au moins un métal ou composé métallique.

14. Procédé selon la revendication précédente, **caractérisé en ce que** le matériau poreux comprend au moins un métal choisi parmi les métaux du groupe VIII et les métaux du groupe VIB de la Classification Périodique des Eléments, et/ou au moins un composé inorganique d'un tel métal.

15. Procédé selon l'une quelconque des revendications 1 à 12, **caractérisé en ce que** le matériau poreux sous forme de particules est choisi parmi les charbons actifs, les zéolithes (ou tamis moléculaires), les alumines, les gels de silice, et les argiles activées, et pouvant contenir en outre des métaux.

16. Procédé selon l'une quelconque des revendications précédentes, **caractérisé en ce que** les particules contiennent un ou plusieurs composés organiques, qui comprennent de préférence 1 à 15 atomes de carbone, plus préférentiellement de 2 à 10 atomes de carbone, ces composés pouvant contenir en outre un ou plusieurs hétéroatomes choisis parmi l'oxygène, l'azote et le soufre.

17. Procédé selon l'une quelconque des revendications précédentes, **caractérisé en ce que** les composés organiques, halogénés, borés et/ou phosphorés sont présents en une teneur totale allant de 0,1 à 20% en poids, de préférence de 0,5 à 15% en poids, plus préférentiellement de 1 à 10% en poids, et mieux encore de 1,5 à 5% en poids, par rapport au poids totale desdites particules.

**Patentansprüche**

1. Verfahren zum Verhindern von Gasemissionen, die von einer oder mehreren Verbindungen erzeugt werden, die ausgewählt sind aus organischen Verbindungen, Halogenverbindungen, Borverbindungen und Phosphorverbindungen, die in einem porösen Material in Form von Teilchen vorliegen, das einen anorganischen porösen Träger und mindestens 0,1 Gewichts-% von einer oder mehreren der Verbindungen umfasst, **dadurch gekennzeichnet, dass** die Teilchen in einem Heißgasstrom, der sie durchströmt, in Bewegung versetzt werden, und eine flüssige Zusammensetzung, die ein filmbildendes Polymer oder mehrere filmbildende Polymere enthält, mit einer Zweistoffzerstäubungsdüse, in der die flüssige Zusammensetzung mit einem Druckgas vermischt wird, auf die sich bewegenden Teilchen mit einem relativen Zerstäubungsdruck, der dem Unterschied zwischen dem Druck des Gases im Inneren der Düse und dem Umgebungsdruck entspricht, von größer gleich $0,7.10^5$ Pa zerstäubt wird, bis auf der Oberfläche der Teilchen eine Schutzschicht erhalten wird, die das filmbildende Polymer bzw. die filmbildenden Polymere enthält und eine mittlere Dicke von 0,5 bis 20 $\mu$m aufweist.

2. Verfahren nach dem vorhergehenden Ansprüche, **dadurch gekennzeichnet, dass** der relative Zerstäubungsdruck von $0,7.10^5$ bis $4.10^5$ Pa, bevorzugter von $1,2.10^5$ bis $3.10^5$ Pa, noch bevorzugter von $1,5 \cdot 10^5$ bis $2,5 \cdot 10^5$ Pa und noch bevorzugter von $1,7 \cdot 10^5$ bis $2,3 \cdot 10^5$ Pa beträgt.

3. Verfahren nach einem der vorhergehenden Ansprüche, **dadurch gekennzeichnet, dass** die flüssige Zusammensetzung eine Lösung oder eine Dispersion des filmbildenden Polymers bzw. der filmbildenden Polymere in einem Lösungsmittel ist und vorzugsweise 0,1 bis 50 Gewichts-% filmbildendes Polymer, bevorzugter 0,5 bis 25 Gewichts-% und noch bevorzugter 1 bis 10 Gewichts-% filmbildendes Polymer bezogen auf das Gesamtgewicht der Zusammensetzung enthält.

4. Verfahren nach einem der vorhergehenden Ansprüche, **dadurch gekennzeichnet, dass** es in einer perforierten Trommel durchgeführt wird, in der die Teilchen in Bewegung versetzt werden, wobei die perforierte Trommel kontinuierlich von einem Heißgasstrom durchströmt wird.

5. Verfahren nach dem vorhergehenden Anspruch, **dadurch gekennzeichnet, dass** es in einer perforierten Trommel durchgeführt wird, die im kontinuierlichen Betrieb arbeitet.

6. Verfahren nach einem der Ansprüche 1 bis 3, **dadurch gekennzeichnet, dass** es durchgeführt wird, indem die Teilchen mit dem Heißgasstrom in den Zustand einer Wirbelschicht versetzt werden.

7. Verfahren nach einem der vorhergehenden Ansprüche, **dadurch gekennzeichnet, dass** der die Teilchen durchströmende Gasstrom eine Temperatur von 30 bis 150°C und vorzugsweise von 50 bis 100°C aufweist.

8. Verfahren nach einem der vorhergehenden Ansprüche, **dadurch gekennzeichnet, dass** der Gasstromdurchsatz 5 bis 100 m$^3$ pro Stunde und pro Kilogramm Katalysator beträgt.

9. Verfahren nach einem der vorhergehenden Ansprüche, **dadurch gekennzeichnet, dass** die Schutzschicht 50 bis 100 Gewichts-% von einem filmbildenden Polymer oder mehreren filmbildenden Polymeren umfasst und die Schutzschicht vorzugsweise vollständig aus einem filmbildenden Polymer oder mehreren filmbildenden Polymeren besteht.

10. Verfahren nach einem der vorhergehenden Ansprüche, **dadurch gekennzeichnet, dass** das filmbildende Polymer oder die filmbildenden Polymere ausgewählt wird bzw. werden aus:

- Vinylalkohol-Homo- und Copolymeren wie

- Polyvinylalkoholen;
- Copolymeren, die aus den Monomeren Vinylalkohol und Olefin(en) gebildet sind, beispielsweise Copolymeren, die aus den Monomeren Vinylalkohol und Ethylen gebildet sind (EVOH-Copolymere); und
- Copolymeren aus teilweise hydrolysierten Vinylalkohol-Copolymeren, das heißt die noch Vinylacetat-Einheiten enthalten, die nicht hydrolysiert sind;

- Polyethylenglycolen;
- Collagen;
- Polyethylenterephthalaten (PET);
- Polyethylennaphthalaten (PEN);
- Polyamiden;
- Polysacchariden, insbesondere Cellulosepolymeren und ihren Derivaten (darunter insbesondere $C_1$- bis $C_4$-Alkylcellulosen und noch spezifischer Methylcellulosen) und Stärken, gegebenenfalls modifizierten Stärken;
- Polyvinylchloriden (PVC);
- Polyvinylidenchloriden (PVDC);
- Polyacrylonitrilen (PAN);
- Polyacrylatharzen, beispielsweise insbesondere Methylpolyacrylaten;
- Copolymeren, bei denen mindestens eins der Monomere ein Acrylat ist;
- und ihren Mischungen,
und das filmbildende Polymer vorzugsweise aus Polyvinylalkoholen und Copolymeren ausgewählt wird, die aus den Monomeren Vinylalkohol und Olefin(en) gebildet sind, und bevorzugter ausgewählt aus Copolymeren, die aus den Monomeren Vinylalkohol und Ethylen gebildet sind (EVOH-Copolymere).

11. Verfahren nach einem der vorhergehenden Ansprüche, **dadurch gekennzeichnet, dass** die mittlere Dicke der Schutzschicht zwischen 0,5 und 10 $\mu$m und noch bevorzugter zwischen 2 und 8 $\mu$m beträgt.

12. Verfahren nach einem der vorhergehenden Ansprüche, **dadurch gekennzeichnet, dass** die Gesamtmenge an eingesetztem filmbildendem Polymer zwischen 0,1 und 4 Gewichts-%, vorzugsweise zwischen 0,5 und 4 Gewichts% und noch bevorzugter zwischen 1 und 3 Gewichts-% beträgt, bezogen auf das Gesamtgewicht der Ausgangsteilchen.

13. Verfahren nach einem der vorhergehenden Ansprüche, **dadurch gekennzeichnet, dass** das poröse Material in Form von Teilchen einen Träger aus einem feuerfesten Oxid umfasst, auf dem mindestens ein Metall oder eine Metallverbindung aufgebracht ist.

14. Verfahren nach dem vorhergehenden Anspruch, **dadurch gekennzeichnet, dass** das poröse Material mindestens ein Metall, das aus Metallen der Gruppe VIII und den Metallen der Gruppe VIB des Periodensystems der Elemente ausgewählt ist, und/oder mindestens eine anorganische Verbindung eines solchen Metalls umfasst.

15. Verfahren nach einem der Ansprüche 1 bis 12, **dadurch gekennzeichnet, dass** das poröse Material in Form von Teilchen aus Aktivkohlen, Zeolithen (oder Molekularsieben), Aluminiumoxiden, Kieselgelen und aktivierten Tonmineralien ausgewählt ist, und ferner Metalle enthalten kann.

16. Verfahren nach einem der vorhergehenden Ansprüche, **dadurch gekennzeichnet, dass** die Teilchen eine oder mehrere organische Verbindungen enthalten, die vorzugsweise 1 bis 15 Kohlenstoffatome, bevorzugter 2 bis 10 Kohlenstoffatome umfassen, wobei diese Verbindungen ferner ein oder mehrere Heteroatome enthalten können, die aus Sauerstoff, Stickstoff und Schwefel ausgewählt werden.

17. Verfahren nach einem der vorhergehenden Ansprüche, **dadurch gekennzeichnet, dass** die organischen Verbindungen, Halogen-, Bor- und/oder Phosphorverbindungen in einem Gesamtgehalt vorliegen, der zwischen 0,1 und 20 Gewichts-%, vorzugsweise 0,5 bis 15 Gewichts-%, bevorzugter zwischen 1 und 10 Gewichts-% und noch bevorzugter zwischen 1,5 und 5 Gewichts-% beträgt, bezogen auf das Gesamtgewicht der Teilchen.

**Claims**

1. Process for eliminating the emissions of gases released by one or more compounds chosen from organic compounds, halogen compounds, boron compounds and phosphorus compounds present in a porous material in the form of particles comprising a porous inorganic support and at least 0.1% by weight of one or more of said compounds, **characterized in that** the particles are placed in motion within a hot gas stream traversing them, and a liquid composition containing one or more film-forming polymer(s) is sprayed over the moving particles by means of a twin-fluid atomization nozzle, in which the liquid composition is mixed with a pressurized gas, with a relative atomization pressure, corresponding to the difference in pressure between the pressure of the gas inside the nozzle and atmospheric pressure, of greater than or equal to $0.7 \times 10^5$ Pa, until a protective layer containing the film-forming polymer(s) and exhibiting a mean thickness ranging from 0.5 to 20 $\mu$m is obtained on the surface of the said particles.

2. Process according to the preceding claim, **characterized in that** the relative atomization pressure ranges from $0.7 \times 10^5$ to $4 \times 10^5$ Pa, more preferably from $1.2 \times 10^5$ to $3 \times 10^5$ Pa, more preferably still from $1.5 \times 10^5$ to $2.5 \times 10^5$ Pa, and better still from $1.7 \times 10^5$ to $2.3 \times 10^5$ Pa.

3. Process according to either of the preceding claims, **characterized in that** the liquid composition is a solution or a dispersion of the film-forming polymer(s) in a solvent and preferably contains from 0.1 to 50% by weight of film-forming polymer, more preferably from 0.5 to 25% by weight and more preferably still from 1 to 10% by weight of film-forming polymer, with respect to the total weight of the composition.

4. Process according to one of the preceding claims, **characterized in that** it is carried out in a perforated drum in which the particles are placed in motion, the said perforated drum being continuously traversed by a stream of hot gas.

5. Process according to the preceding claim, **characterized in that** it is carried out in a perforated drum operating in continuous mode.

6. Process according to one of Claims 1 to 3, **characterized in that** it is carried out by placing the particles in fluidized bed using the stream of hot gas.

7. Process according to any one of the preceding claims, **characterized in that** the stream of gas traversing the particles exhibits a temperature ranging from 30 to 150°C and preferably from 50 to 100°C.

8. Process according to any one of the preceding claims, **characterized in that** the flow rate of the stream of gas is from 5 to 100 m$^3$ per hour and per kilogram of catalyst.

9. Process according to any one of the preceding claims, **characterized in that** the protective layer comprises from 50 to 100% by weight of one or more film-forming polymer(s) and preferably the protective layer consists entirely of one or more film-forming polymer(s).

10. Process according to any one of the preceding claims, **characterized in that** the film-forming polymer(s) are chosen from:

- vinyl alcohol homo- and copolymers, such as:

  - polyvinyl alcohols;
  - copolymers formed from vinyl alcohol and olefin monomers, such as the copolymers formed from vinyl alcohol and ethylene monomers (EVOH copolymers); and
  - partially hydrolyzed vinyl alcohol copolymers, that is to say still containing nonhydrolyzed vinyl acetate units;

- polyethylene glycols;
- collagen;
- polyethylene terephthalates (PET);
- polyethylene naphthalates (PEN);
- polyamides;
- polysaccharides, in particular cellulose polymers and their derivatives (among which in particular $C_1$-$C_4$ alkyl celluloses and more particularly methyl celluloses), and starches, which are optionally modified;
- polyvinyl chlorides (PVCs);
- polyvinylidene chlorides (PVDCs);
- polyacrylonitriles (PANs);
- polyacrylate resins, such as, in particular, polymethyl acrylates;

- copolymers, at least one of the monomers of which is of acrylate type;
- and their mixtures,

and preferably the film-forming polymer is chosen from polyvinyl alcohols and copolymers formed from vinyl alcohol and olefin monomers and more preferably from copolymers formed from vinyl alcohol and ethylene monomers (EVOH copolymers).

11. Process according to any one of the preceding claims, **characterized in that** the mean thickness of the protective layer ranges from 0.5 to 10 μm and even better still ranges from 2 to 8 μm.

12. Process according to any one of the preceding claims, **characterized in that** the total amount of film-forming polymer employed ranges from 0.1 to 4% by weight, preferably from 0.5 to 4% by weight and more preferably still from 1 to 3% by weight, with respect to the total weight of the initial particles.

13. Process according to any one of the preceding claims, **characterized in that** the porous material in the form of particles comprises a refractory oxide support on which is deposited at least one metal or metal compound.

14. Process according to the preceding claim, **characterized in that** the porous material comprises at least one metal chosen from the metals of Group VIII and the metals of Group VIb of the Periodic Table of the Elements and/or at least one inorganic compound of such a metal.

15. Process according to any one of Claims 1 to 12, **characterized in that** the porous material in the form of particles is chosen from active charcoals, zeolites (or molecular sieves), aluminas, silica gels and activated clays, and which can in addition contain metals.

16. Process according to any one of the preceding claims, **characterized in that** the particles contain one or more organic compounds which preferably comprise from 1 to 15 carbon atoms and more preferably from 2 to 10 carbon atoms, it being possible for these compounds to additionally contain one or more heteroatoms chosen from oxygen, nitrogen and sulphur.

17. Process according to any one of the preceding claims, **characterized in that** the organic, halogen, boron and/or phosphorus compounds are present in a total content ranging from 0.1 to 20% by weight, preferably from 0.5 to 15% by weight, more preferably from 1 to 10% by weight and better still from 1.5 to 5% by weight, with respect to the total weight of the said particles.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2174711 A
- EP 2962757 A1
- WO 2015197712 A1
- EP 0897748 A1